# EUROPEAN PATENT APPLICATION

(11) **EP 2 246 112 A1**
(43) Date of publication of application: **03.11.2010**
(21) Application number: 07817304.4
(22) Date of filing: 23.11.2007
(51) Int. Cl.: B01J 31/22, B01J 31/28, C07H 1/00, C10L 1/00

(54) **SYSTEM FOR BIONIC CATALYTIC HYDROLYZING CELLULOSE AND ITS USE IN PRODUCING LIQUID FUEL FROM CELLULOSE BIOMASS**

(71) Applicant: China Fuel (Huaibei) Bioenergy Technology Development Co., Ltd, Huaibei Anhui 235000 (CN)
(72) Inventor: SUN, Meg, M., San Diego California CA92128 (US); ZHU, Zuolin, San Diego California CA92128 (US); YIE, Hongping, Huaibei Anhui 235000 (CN)
(74) Representative: Biggi, Cristina
(86) International application number: PCT/CN2007/071114
(87) International publication number: WO 2009/065275

(57) **Abstract**

A bionic catalyst for hydrolyzing cellulose and hemicellulose and its preparation method. The catalyst comprises double acid radical catalytic portions and cellulose-linking portions, and can be used under room temperature and high temperature. The catalyst can hydrolyze cellulose and hemicellulose simultaneously, while not decompose glucose and xylose, and may be recycled efficiently. The catalyst can be combined with the process in the prior art to produce liquid fuel.

## Description

### Technical Field

The present invention relates to a novel bionic catalysis system for cellulose and a process for rapid refining biomass to produce liquid fuel, more particularly, to a bionic catalyst for rapid pretreatment of cellulosic biomass under ambient temperature and pressure and rapid catalytic hydrolysis of cellulose or hemicellulose to produce saccharide, as well as to a process for recovering the bionic catalyst.

### Background Art

Rapid development of the global industrialization leads to notable increasing consumption of non-renewable energy such as fossil energy, for example, coal, petroleum, nuclear energy and natural gas. Fossil energy has reached or is on its way to its supply peak. Shortage of fossil energy and global warming resulting from use of fossil energy constitute the difficulties that have to be overcome to ensure the existence and sustainable development of human beings. The most reliable means to overcome these difficulties is to produce liquid fuel from cellulosic biomass.

We have successfully invented and fully published a relatively complete set of technologies for comprehensive use of all the three main members of cellulosic biomass, namely cellulose, hemicellulose and lignin, to produce liquid fuel such as gasoline, diesel, ethanol and the like (see WO/2007/095787, CN200710084896.6 and CN200710006858.9).

However, cellulases, for which the development is just in the primary stage, meets a series of problems in its manufacture and application. For example, pure cellulose has to be used as carbon source in the manufacture, and pure oxygen is necessary in fermentation, leading to the result that the production cost of cellulases can not be lowered to an appropriate level in a short term. Besides, the catalytic activity of cellulases is relatively low; the hydrolysis time of cellulose is relatively long (over 48 hours); activities of cellulases are inhibited by glucose result in the rather low concentration of sugar produced by hydrolysis of cellulose, and the cellulose used for hydrolysis by cellulases should have relatively complete removal of lignin and hemicellulose, all these problems have serious impact on the industrial production. Furthermore, when cellulases is used as the catalyst to hydrolyze cellulose, there is no simple and ideal sterilization method available yet. If antibiotic were used as the only agent for sterilization, huge volume would be applied that could cause unpredictable results.

On the other hand, hemicellulose possesses very complex structure which depends on the type or even the place where it grows. The development of hemicellulases is still far away from success, for its catalytic effect and cost render it difficult to be used in industrial production. As far as it goes, there is no commercially available hemicellulases.

Summing up the above, none of the currently available cellulose and hemicellulasess is applicable in the industrial production.

Therefore, there is still an urgent need in the art for a bionic catalyst for hydrolyzing cellulose and hemicellulose, wherein the catalyst, when used in a fermentation process for producing liquid fuel from cellulosic biomass, has the high selectivity of cellulases and the rapid catalytic effect of strong acid catalyst.

### Summary of the Invention

The first object of the invention is to provide a bionic catalyst for catalytic hydrolysis of cellulose and/or hemicellulose, wherein the catalyst, when used in a fermentation process for produce liquid fuel from cellulosic biomass, represents both the high selectivity of cellulases and the rapid catalytic effect of strong acid catalyst.

The second object of the invention is to provide a process for hydrolyzing cellulosic biomass, wherein the process is characterized by high selectivity and rapid catalytic effect.

The third object of the invention is to provide a use of the bionic catalyst.

In the first aspect of the invention, there is provided a bionic catalyst for the catalytic hydrolysis of cellulose and/or hemicellulose, wherein the catalyst comprises a bi-acid group catalytic domain and a cellulose binding domain.

In a particular embodiment of the invention, the bionic catalyst has a structure shown in formula 1: 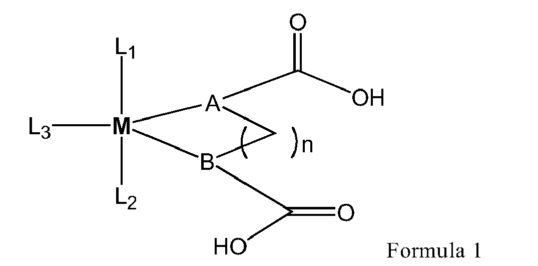 wherein:
M represents the bi-acid group catalytic domain, of which the catalytic center is iron or zinc;
L₁, L₂ and L₃ represent the cellulose binding domain, wherein each of the cellulose binding domain is a monodentate, bidentate, tridentate and/or tetradentate ligand, and they may be identical with or different from each other;
A and B are independently C, N, S, B, Si or P, wherein A and B may be the same or different, and a single or double bond exists between A and B;
n represents an integer selected from 0, 1 or 2.

In a particular embodiment of the invention:
the monodentate ligand is selected from those comprising N, O, S, P, halogen, C, Si, B and the like as ligating atoms, or those comprising double bonds, triple bonds, aromatic rings and the like as ligating sites, preferably CO, Cp⁻, organic phosphorus ligands, halogen ions (C1⁻, Br⁻, I⁻), PF₆⁻, BF₄⁻, maleic acid, itaconic acid, fumaric acid or a combination thereof;
the bidentate ligand is selected from N-N ligands, N-P ligands, P-O ligands, P-P ligands, O-N ligands, O-S ligands, S-N ligands, O-O ligands, P-S ligands, S-S ligands, and those comprising N, O, S, P, C, B, Si as ligating atoms and containing any two ligating sites,
   preferably 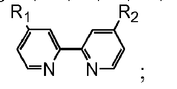
the tridentate ligand is selected from N-N-N ligands, N-P-N ligands, P-N-N ligands, P-P-N ligands, P-N-P ligands, O-N-N ligands, S-N-N ligands, O-N-O ligands, P-N-S ligands, P-P-P ligands, S-S-S ligands, O-O-O ligands, and those comprising N, O, S, P, C, B, Si as ligating atoms and containing any three ligating sites, preferably terpyridine containing three nitrogen atoms, maltol containing nitrogen and oxygen, or a combination thereof.

In the second aspect of the invention, there is provided a process for hydrolyzing cellulosic biomass comprising cellulose, hemicellulose and/or lignin, wherein the process comprises the following steps:
(a) providing a mixture of bionic catalyst and cellulosic biomass;
(b) hydrolyzing the mixture of step (a) to produce a hydrolysate comprising monosaccharide; and
(c) fermenting, degrading or liquefying the hydrolysate of step (b) to give a liquid fuel, wherein the liquid fuel includes ethanol, gasoline, aromatic compounds or a combination thereof.

Preferably, the concentration of the bionic catalyst in the mixture of step (a) is 5-200mM.

Preferably, the ratio of the amount of bionic catalyst to the cellulosic biomass used in the mixture of step (a) is in the range of 1-2mM/g.

Preferably, the weight/volume ratio of cellulose to hemicellulose in the mixture of step (b) can be up to 10%-25%.

Preferably, the hydrolysate of step (c) comprises monosaccharide and/or lignin, wherein the monosaccharide is fermented to give ethanol, and the lignin is degraded or liquefied to give gasoline, aromatic compounds or a combination thereof.

In a particular embodiment of the invention, step (b) is carried out in a thermal field.

In a particular embodiment of the invention, the cellulosic biomass has been pretreated by a high-pressure-and-temperature process using strong acid or base, strong acid or base steam explosion, ammonia steam explosion, an ambient temperature and pressure chemical-physical field process or a combination thereof.

Preferably, the physical field of the ambient temperature and pressure chemical-physical field process includes ultrasound wave, microwave, magnetic force or a combination thereof.

Preferably, the chemical reagent used for the ambient temperature and pressure chemical-physical field process includes substances that can be readily recycled by distillation, with ammonia and concentrated phosphoric acid particularly preferred.

In a particular embodiment of the invention, when the chemical reagent of the ambient temperature and pressure chemical-physical field process is concentrated phosphoric acid, the pretreatment comprises the following steps:
treating the mixture of cellulosic biomass and concentrated phosphoric acid in the physical field to give the pretreated cellulosic biomass;
separating the pretreated cellulosic biomass to give cellulose as well as the recycled phosphoric acid and organic solvent.

Preferably, the separation step is carried out by extraction, precipitation or a combination thereof.

In a particular embodiment of the invention, cellulosic biomass is pretreated in step (b) by a ambient temperature and pressure chemical-physical field process, wherein the physical field is an ultrasound wave field having a frequency in the range of 17kHz-300MHz, most suitably in the range of 18kHz-100MHz, and an intensity in the range of 0.1W-10kW/L, preferably in the range of 0.1W/cm²-300 W/cm², most suitably in the range of 2-6kW, preferably in the range of 80 W/cm²-200 W/cm², most preferably 2kW/20kHz; and/or a microwave field having a frequency in the range of 300MHz-300GHz, and an intensity in the range of 0.1W-10kW/L, preferably in the range of 100-3000W/L; and/or a magnetic field having an intensity of 0.2-12T.

In a particular embodiment of the invention, the process further comprises a catalyst recovering step (d1): extracting the hydrolysate of step (b) with an organic solvent to recycle the catalyst.

In a particular embodiment of the invention, the process further comprises a catalyst recovering step (d2): treating the hydrolysate of step (b) with exchange resin to recycle the catalyst.

Preferably, the resin comprises a macroporous adsorption resin, a weak basic type macroporous adsorption resin, a heat regenerable resin or a combination thereof.

In the third aspect of the invention, there is provided a use of the bionic catalyst of the invention in the hydrolysis of cellulose and/or hemicellulose.

Preferably, the catalyst is used in the hydrolysis of cellulose comprising lignin.

Preferably, the catalyst is used in the hydrolysis of both cellulose and hemicellulose.

### Brief Description of the Drawings

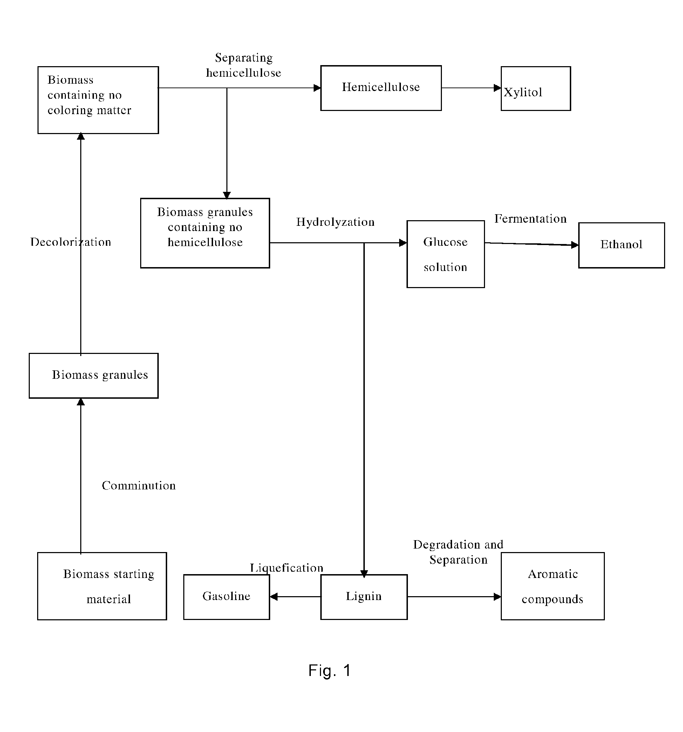

Fig. 1 shows a process flow chart of a particular embodiment of the invention, wherein the bionic catalyst system of the invention is used to make relatively full use of cellulosic biomass to produce high value-added products, such as liquid fuel like ethanol and gasoline, xylitol and aromatic compounds.

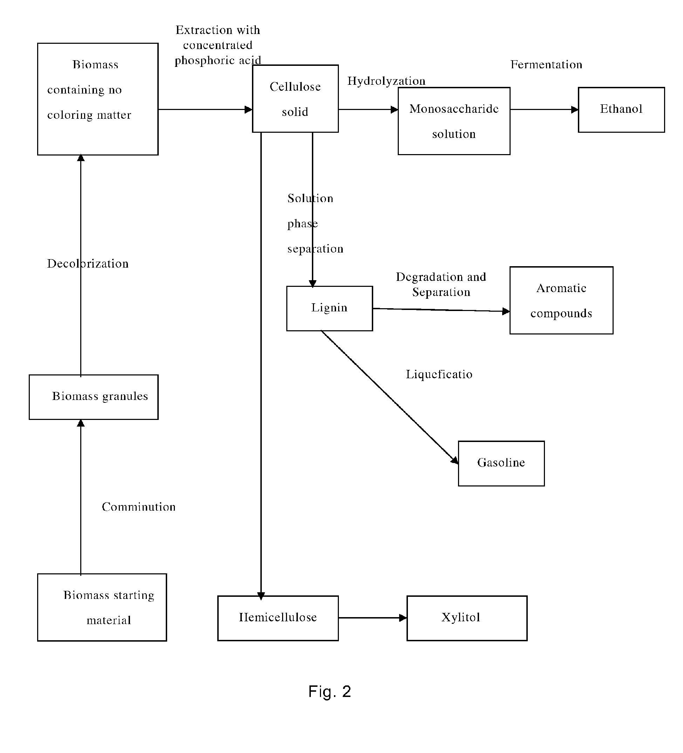

Fig. 2 shows a process flow chart of another particular embodiment of the invention, wherein cellulosic biomass is pretreated prior to hydrolysis, and then the bionic catalyst system of the invention is used to make relatively full use of the cellulosic biomass to produce high value-added products, such as liquid fuel like ethanol and gasoline, xylitol and aromatic compounds.

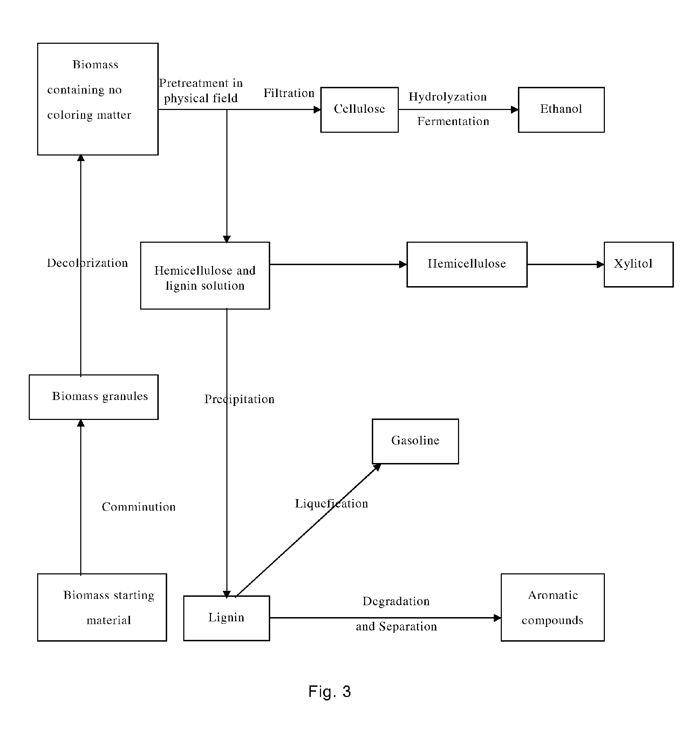

Fig. 3 shows a process flow chart of another particular embodiment of the invention, wherein cellulosic biomass is pretreated by a chemical-physical field process at ambient temperature and pressure, and then the solid cellulose is separated and converted into fuel ethanol by using the bionic catalyst system of the invention, the lignin remained in the liquid is precipitated, separated and converted into gasoline or aromatic compounds, and the hemicellulose remained in the liquid is converted into xylitol.

### Detailed Description of the Invention

After intensive study, the inventors have discovered a bionic catalyst with a particular structure, which has both the high selectivity of cellulases and the rapid catalytic effect of strong acid catalyst. Based on this finding, the invention has been finished.

The inventors have developed a synthetic bionic catalyst based on the catalytic mechanism of naturally existing hydrolases. For example, despite the unclear detailed catalytic mechanism of cellulases, it has been basically assured that cellulases have three different functional domains: a catalytic domain, a cellulose binding domain and a linking domain. Generally, the catalytic domain of cellulases is comprised of two amino acids comprising acid residues, namely glutamic acid and aspartic acid, wherein one acid residue functions as a donor of proton, while the other one is a nucleophilic functional group.

A common hydrolase is generally a protein complex comprising zinc or iron. Zinc and iron are low-cost transition metals which are naturally available in abundance and readily available. Transition metal ions of iron, zinc and the like exhibit strong interaction with hydroxyl group, making them suitable for the cellulose binding domain of the catalyst.

According to the invention, there is provided a bionic catalyst designed to have a bi-acid group catalytic domain and a cellulose binding domain. The inventors have discovered that the synthetic bionic catalyst of the invention generally shows the selectivity of a biological enzyme reagent, namely, it can catalyze a reaction specifically and producing little by-products. Moreover, the bionic catalyst may tolerate rigorous reaction conditions such as high temperature, high pressure and strong acidity or basicity, reduce reaction time significantly, and result in greater concentration of the product as the product imposes little refrainment on the catalyst. In addition, the bionic catalyst may function in an environment where no microbial species can survive, so that sterilization is generally obviated for a bionic catalyst system.

Various aspects of the invention will be described in detail hereafter.

The bionic catalyst of the invention, a biomimetic cellulases, has a structure shown in formula 1: 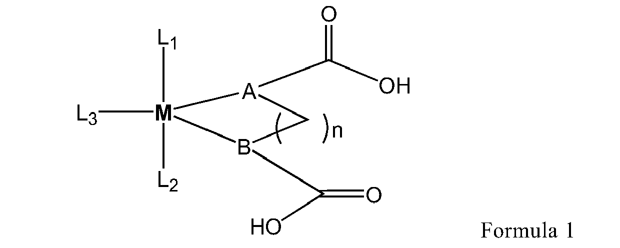 wherein M is iron (Fe, having an oxidation state of 0, +2, +3) or zinc (Zn, having an oxidation state of 0, +2);
L₁, L₂ and L₃ are ligands, wherein each of them may be a monodentate, bidentate, tridentate, tetradentate, pentadentate or hexadentate ligand, and may be identical or different.
Examples of a monodentate ligand include but are not limited to those comprising N, O, S, P, halogen, C, Si, B and the like as ligating atoms, or those having double bonds, triple bonds, aromatic rings and the like as ligating sites, for example, CO, Cp⁻, organic phosphorus ligands, halogen ions (C1⁻, Br⁻, I⁻), PF₆⁻, BF₄⁻, maleic acid, itaconic acid, fumaric acid and the like.
Examples of a bidentate ligand include but are not limited to N-N ligands, N-P ligands, P-O ligands, P-P ligands, O-N ligands, O-S ligands, S-N ligands, O-O ligands, P-S ligands, S-S ligands, and those comprising N, O, S, P, C, B, Si as ligating atoms and containing any two ligating sites, for example 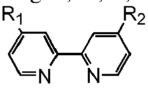 and the like.
Examples of a tridentate ligand include but are not limited to N-N-N ligands, N-P-N ligands, P-N-N ligands, P-P-N ligands, P-N-P ligands, O-N-N ligands, S-N-N ligands, O-N-O ligands, P-N-S ligands, P-P-P ligands, S-S-S ligands, O-O-O ligands, and those comprising N, O, S, P, C, B, Si as ligating atoms and containing any three ligaing sites, for example, terpyridine containing three nitrogen atoms, maltol containing nitrogen and oxygen and the like.
As used herein, "tridentate ligand" refers to a molecule which can provide three ligating sites rather than a single site. Specifically, "N-N-N" means that the all three ligating sites of the ligand are nitrogen.
In the complex, A and B are independently C, N, S, B, Si or P, wherein A and B may be identical or different, and a single or double bond exists between A and B.
In the complex, n is an integer which may be 0, 1 or 2. In the ligand molecule, there may existing a single bond, double bond or triple bond between A and B.
All complexes have relatively high water solubility.
All complexes comprise at least two acid groups that represent the catalytic domain of the bionic catalyst, wherein one acid residue functions as a donor of proton, while the other one is a nucleophilic functional group.

Specific examples of the complexes described above include but are not limited to the compounds shown in formulae 2 and 3: 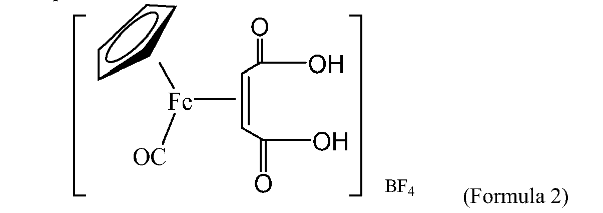 In formula 2,
M=Fe, L₁=Cp (cyclopentadiene), L₂=CO, L₃=BF₄⁻, both A and B are carbon and linked by a double bond, and n=0. 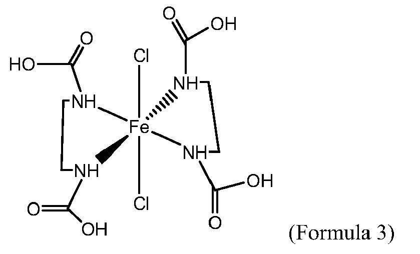 In formula 3,
M=Fe, L₁=COONHNHCOOH (bidentate), L₂=Cl⁻, L₃= Cl⁻,
A and B are nitrogen and linked by a single bond, and n=2.
The complexes described above can be synthesized by any method known in the art for preparing a complex without any limitation. Specific examples include but are not limited to the following: the ligands in a known simple complex used as the starting material are substituted by the desired ligands in a solvent, such as ethyl ether, which has no impact on the consistency of the reaction and the stability of the product, followed by tailoring the oxidation state of the central metal as required, if necesssary; or the oxidation state of the central metal is tailored first, followed by substituting the original ligands with the desired ligands, and finally the product is purified and dried as required, if necessary. Specifically, for example, the complex of diiron enneacarbonyl [Fe₂(CO)₉] and maleic acid are used for preparing [Fe(CO)₄ (maleic acid)] at ambient temperature or higher under the protection of nitrogen, the reaction is generally carried out in a solvent such as ether or benzene. Alternatively, [Fe (CO)₃ (maleic acid)₂] and [Fe (CO)₂ (maleic acid)₃] may be obtained via low temperature photochemical reaction from the raw material of iron pentacarbonyl at a relatively high concentration of the ligand. Alternatively, diiron enneacarbonyl, iron pentacarbonyl and the like may be used for preparing the dimer of cyclopentadienyl iron dicarbonyl, followed by subsequent reactions. Alternatively, the commercially available dimer of cyclopentadienyl iron dicarbonyl {[CpFe(CO)₂]₂} may be used directly as the starting material, and the oxidation state of iron is changed by oxidation with bromide, followed by ligand substitution. Of course, a simple salt having desirable oxidation state such as ferric acetate and the like may also be used as the starting material, and coordination reactions may be carried out in sequence.
The complex comprising bi-ligand is generally prepared in a more polar solvent such as an alcohol.
When these complexes are used as the bionic catalyst for hydrolyzing cellulose and hemicellulose, their concentration in the hydrolysis system is generally kept between 0.1mM-10M, preferably 5-200mM, in order to obtain a desirable hydrolysis rate. If the content is lower than above numerical range, the hydrolysis rate will be too slow, while if the content is higher that above range, the cost of the catalyst will be unacceptably high.
When used as the bionic catalyst for hydrolyzing cellulose and hemicellulose, these complexes are not found to cause degradation of glucose, xylitol and other monosaccharides. On the contrary, when these complexes are used as the bionic catalyst for hydrolyzing cellulose and hemicellulose, less degradation of glucose and xylitol is observed in contrast to the extent of degradation of glucose and xylitol in pure water (in the absence of any catalyst) at the same reaction temperature.

In order to achieve desirable effect of hydrolysis and minimize the degradation of glucose and xylitol caused by water, the hydrolysis has to be carried out as quickly as possible. When these complexes are used as the bionic catalyst for hydrolyzing cellulose and hemicellulose, the ratio of the complex used in the hydrolysis system to cellulose or hemicellulose is generally in the range of 0.1-1000mmo1/g, preferably 1-2mmol/g. Especially when a thermal field is used for accelerating the reaction, more degradation of glucose and xylitol caused by water will be expected when the ratio is lower than this range, while the cost of catalyst will be too high when a ratio higher than this range is used.
The cellulosic biomass of the invention may or may not be pretreated.
When these complexes of the invention are used as the bionic catalyst for hydrolyzing cellulose and hemicellulose, the cellulosic biomass generally needs no pretreatment, though pretreatment may accelerate the hydrolysis.
Pretreatment of the cellulosic biomass may be carried out by any process known in the art, such as physical process, chemical process, bioprocess, chemical-physical process, all of which are compatible with the bionic catalyst disclosed in the invention.
A chemical-physical process is preferred, including but not limited to, for example, the commonly used high-pressure-and-temperature process using strong acid or base, strong acid or base steam explosion, ammonia steam explosion, a chemical-physical field process at ambient temperature and pressure and the like.
In a ambient temperature and pressure chemical-physical field process, the physical field preferably includes but is not limited to ultrasound wave, microwave and magnetic force field. In a preferred embodiment, the microwave field has a frequency in the range of 300MHz-300GHz, and an intensity in the range of 0.1W-10kW/L, preferably in the range of 100-3000W/L. The ultrasound wave field has a frequency in the range of 17kHz-300MHz, preferably in the range of 18kHz-100MHz, and an intensity in the range of 0.1W/cm²-300 W/cm², preferably in the range of 40W/cm²-100 W/cm². The intensity of magnetic force field is the larger the better, but preferably in the range of 0.2-12T for the sake of economical efficiency.

The chemical reagent used for the ambient temperature and pressure chemical-physical field process may be a common acid or base, preferably a substance that is readily recyclable through distillation, including but not limited to ammonia, concentrated phosphoric acid and the like.

The pretreatment process using ammonia has been published in our prior patent WO/2007/095787. When concentrated phosphoric acid is used as the chemical reagent for the ambient temperature and pressure chemical-physical field process, the pretreatment includes the following steps: mixing cellulosic biomass and concentrated phosphoric acid evenly, and pretreating the mixture in a physical field for generally 5 seconds to 18 hours, preferably 1 minute to 90 minutes. After pretreatment, separation is generally carried out by extraction with an extractant that is immiscible with phosphoric acid but fairly miscible with water, including but not limited to acetone, methyl ethyl ketone and the like. Cellulose is precipitated from phosphoric acid using a ketone extractant. The precipitated cellulose may be washed with water, wherein both the phosphoric acid and the organic solvent used in the pretreatment can be readily recycled by distillation.

When these complexes disclosed in the invention are used as the bionic catalyst for hydrolyzing cellulose and hemicellulose, the hydrolysis may be carried out in a physical field at ambient temperature and pressure, or in a thermal field.

When these complexes are used as the bionic catalyst for hydrolyzing cellulose and hemicellulose, the content of cellulose and hemicellulose in the hydrolysate solution may be up to 25% (weight/volume ratio). In contrast, when cellulases in prior art is used, it is quite difficult for the dry content of cellulose and hemicellulose in the hydrolysate solution to reach a maximum of 10%.

The physical field is microwave, ultrasound wave or a combination thereof. In a preferred embodiment, the microwave has a frequency in the range of 30 MHz-300 GHz, and an intensity in the range of 0.1W-10kW/L, preferably in the range of 100-3000W/L. The ultrasound wave has a frequency in the range of 17 kHz-300MHz, preferably in the range of 18kHz-100MHz, and an intensity in the range of 0.1 W/cm²-300 W/cm², preferably in the range of 40W/cm²-100 W/cm².

With regard to the hydrolysis of hemicellulose, the thermal field indicates a temperature in the range of 110-170°C, under such circumstance the pentose seldom degrades. With regard to the hydrolysis of cellulose, the thermal field indicates a temperature in the range of 120-195°C, under such circumstance the degradation of glucose caused by water is quite limited. The catalyst of the invention may also be used at quite high temperature of hydrolysis such as 200-260°C.

When used as the bionic catalyst for hydrolyzing cellulose and hemicellulose, these complexes may be associated with processes known in prior art for producing liquid fuel from cellulosic biomass. For example, the bionic catalyst may be used only in the step of removing hemicellulose from cellulosic biomass, or only in the step of hydrolyzing cellulose in cellulosic biomass.

When used only for hydrolyzing cellulose in cellulosic biomass, the bionic catalyst differs from cellulases in that the catalytic performance of the former is hardly affected by lignin, so that removal of lignin from cellulosic biomass is obviated, leading to a production process greatly simplified on the whole. In the production process flow scheme shown in Fig. 1, at first the cellulosic biomass is comminuted to appropriate size, and then plant coloring matters are removed therefrom in pure water at about 90-100°C. Hemicellulose is then nearly completely removed from the decolorized cellulosic biomass in pure water at relatively high temperature (120-230°C). The main components of the resultant cellulosic biomass are cellulose and lignin. In the presence of the bionic catalyst, this solid releases all hydrolysable glucose, and the insoluble lignin is filtered out as a solid product. Hemicellulose produced in the production flow is converted into xylitol, and lignin is converted into aromatic compounds or gasoline. The decolorization step in the production process flow can make the reaction system has very light color, facilitate the production of less colored lignin, and simplify the decolorization of xylitol.

The bionic catalyst of the invention for hydrolyzing cellulose and hemicellulose may also be associated with pretreatment technologies of the prior art to simplify the whole production process flow substantially. For example, as shown in Fig. 2 according to the invention, after decolorization of the comminuted cellulosic biomass granules, concentrated phosphoric acid is used to directly dissolve cellulose and hemicellulose in a physical field. Subsequently, the mixture is stratified with acetone and lignin may be separated out. Finally, cellulose is precipitated from the concentrated phosphoric acid, washed with water, and hydrolyzed in the presence of the bionic catalyst of the invention to give fermentable monosaccharide which is then converted into alcohol by fermentation, while lignin and hemicellulose left in the liquid phase are separated to give lignin solid and more water-soluble hemicellulose which can be separated and used for preparing xylitol. Concentrated phosphoric acid is used as the extractant in the production process of the invention mainly for two reasons. One of the reason is that the concentrated phosphoric acid is far less corrosive than concentrated sulfuric acid, concentrated hydrochloric acid and other inorganic acids. The other reason is that it can be readily concentrated and recycled by removing acetone and water after acetone and the like are used for producing cellulose and hemicellulose. In addition, if its color gets very deep after long term use, most of the coloring species can be removed by calcination at high temperature.

While the production process flows based on the bionic catalyst disclosed in the invention for hydrolyzing cellulose and hemicellulose as shown in Fig. 1 and 2 are quite favorable for the production of xylitol and ethanol, an additional step is needed to remove the ash from cellulosic biomass, for the ash is generally accompanied with lignin which is to be converted into gasoline at relatively high pressure and temperature, making it very important to minimize the ash in the reactant. Fortunately, this problem can be solved in one step according to an invented pretreatment process published by the inventors (WO/2007/095787). In the production process flow shown in Fig. 3, the ash coexists with cellulose. After cellulose is hydrolyzed and converted into ethanol, the ash in cellulosic biomass can be simply removed by filtration.

The bionic catalyst system, which is developed by the inventors through extensive and intensive study, can be used at relatively high temperature and pressure, has catalytic efficiency far higher than that of cellulases, and can afford a relatively high concentration of saccharide solution due to far less product inhibition in comparison with cellulases. When compared with strong inorganic acids, the bionic catalyst system of the invention leads to far less degradation of monosaccharide, so that the saccharide solution resulting from hydrolysis may be directly used for preparing ethanol by fermentation. In addition, the bionic catalyst system of the invention can be recycled at a relatively high level, so that the production cost is lowered significantly in contrast to prior cellulases. In comparison with strong inorganic acids, the bionic catalyst system of the invention eliminates the need of neutralization of the saccharide solution resulting from hydrolysis with any base, so that the amount of water used is reduced remarkably and the threaten to environment alleviated.

Generally, the bionic catalyst disclosed the invention for hydrolyzing cellulose and hemicellulose has relatively high lipophilicity. After hydrolysis reaction, they may be extracted with a water-immiscible organic solvent for reuse. Common organic solvents for extracting the bionic catalyst complexes include but are not limited to dichloromethane, chloroform, benzene, toluene, ethers, xylenes and the like.

The bionic catalyst disclosed the invention for hydrolyzing cellulose and hemicellulose may also be recovered by exchange resin. After cooled to room temperature, the hydrolysate solution flows through a resin column device, wherein the catalyst is adsorbed on the resin, and the resultant monosaccharide solution is used for fermentation. The resin column device is generally comprised of two columns connected in parallel, wherein desorption and/or regeneration are carried out immediately after the resin in one column is saturated, while the other one is used to continue the production so as not to interrupt the production. Macroporous adsorption resin, weak basic type macroporous adsorption resin, and heat regenerable resin are generally used. These resins are all commercially available, such as XAD-2 resin, D301 resin, Amberlite XAD-4 resin and TRR resins from Novation Co.. The recovery is most preferably carried out with a non-ionic macroporous adsorption resin or a heat regenerable resin, for the product adsorbed on these two types of resins can be eluted with organic solvent or hot water for recovery. The organic solvent is generally ethanol, for one of the main products of refining cellulosic biomass is ethanol, thus reducing the production cost. Hot water of 70-95°C is generally used in thermal regeneration, for recovery is too slow when the temperature is too low, while the structure of resin will be damaged when the temperature is too high.

Heat regenerative resin is amphiphilic and can be self-made if necessary. In a common method, an amino acid having two amino groups is used. One of the amino groups is used for linking an appropriate amount of amino acid to a macroporous resin substrate via covalent bonding reaction. For example, after chloromethylation, polystyrene resin reacts with an amino acid such as lysine to prepare a heat regenerable resin.

Biomass used in the invention may be comminuted biomass solid, including but not limited to biomass having a particle size of 0.01-8mm, preferably 0.1-5mm, and a water content of 1-50 wt%, preferably 5-30 wt% based on the total weight of the biomass.

The ultrasound wave used for the hydrolysis of the invention has a frequency in the range of 17kHz-300MHz, most suitably in the range of 18kHz-100MHz, and an intensity in the range of 0.1W-10kW/L (0.1W/cm²-300 W/cm²), most suitably in the range of 2-6kW/L (80 W/cm²-200 W/cm²), preferably 2kW/20kHz.

The following examples are provided for further illustrating the invention, with no intention to limit the content disclosed in the invention thereto.

The cellulosic biomass used in the following examples is corn stalk (i.e. stalk) which has been comminuted and naturally dried. In the embodiments, the corn stalk comprises 36.4wt% β-glucan, 18.8wt% xylan, 2.8wt% arabinan, 1.8wt% mannan, 2.2wt% galactan, 20.2wt% Klason lignin, 7.0wt% ash, 3.2wt% acetyl group, 4.0wt% protein and 3.8wt% uronic acid.

### Example 1: Synthesis of the Catalyst [CpFeCO (maleic acid)]BF₄

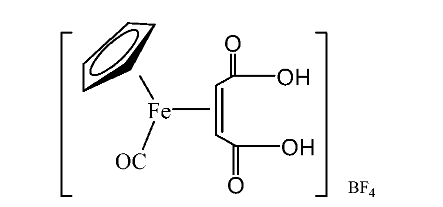

Under the protection of nitrogen, 10mmol cyclopentadienyl iron dicarbonyl dimer was added into a solvent of deoxygenated dry benzene. After the dimer was completely dissolved under agitation, the reaction solution was cooled to about 10°C. Then equivalent moles of bromine was added into the solution, and agitation was continued until the amaranth color completely disappeared. Then 20mmol aluminum tribromide was added into the reaction solution, followed by addition of 21mmol maleic acid. The liquid reaction mixture was heated slowly to 60°C, and held at this temperature for about 4 hours. After cooled to room temperature, 21mmol ammonium boron tetrafluoride (NH₄BF₄) was added. When no additional precipitate was formed, the precipitate was filtered out. After benzene in the solution was removed under vacuum, a crude product was obtained. The crude product was recrystallized with ethyl ether to give a pure product at a yield of 91%.
The formula of the final product was C₁₁H₉BF₄FeO₆. According to elemental analysis, it comprises C%: 44.8, H%: 3.21, Fe%: 19.2 (theoretically C%: 45.09, H%: 3.10, Fe%: 19.06).
¹H-NMR(CDCl₃, δppm): 11.7 (br, 2H); 6.68(s, 2H); 5.21(s, 5H).
¹³C-NMR(CDCl₃, δppm): 218 (CO); 174 (carboxyl); 137.8 (C=C); 89.6 (Cp).

### Example 2: Synthesis of the Catalyst Ethylenediamine Diacetic Acid-Iron Complex

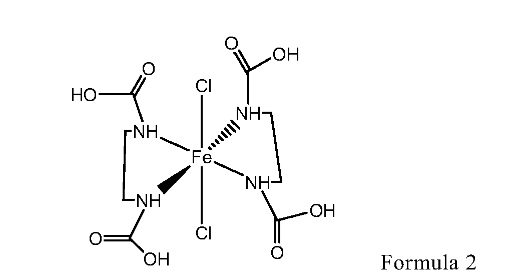

Under the protection of nitrogen, 0.5mmol ferrous dichloride tetrahydrate was dissolved in 10ml deionized water. The resultant solution was added dropwise into a nearly boiling solution of ethylenediamine diacetic acid (1.0mmol) in tetrahydrofuran. Amaranth color began to appear when the iron solution was added dropwise. The reaction was allowed to proceed for 2 hours under agitation, and then the reaction solution was cooled to about 10°C, followed by addition of 20ml ethyl ether to precipitate the product. After washed with a mixture of ethyl ether and acetone and vacuum dried, a pure product was obtained at a yield of 90%.
The formula of the final product was C₈H₁₆Cl₂FeN₄O₂. According to elemental analysis, it comprises C%: 21.98, H%: 3.96, N%: 13.16, Fe%: 13.1 (theoretically C%: 22.72, H%: 3.81, N%: 13.25, Fe%: 13.20).
¹H-NMR(CDCl₃, δppm): 11.2 (br, 4H); 6.68 (br, 4H); 3.21(m, 8H).
¹³C-NMR(CDCl₃, δppm): 158 (carboxyl); 23.8 (CH₂).

### Example 3: Catalytic Hydrolysis of Cellulose at Ambient Temperature and Pressure in the Presence of the Catalyst [CpFeCO(maleic acid)]BF₄

Into 100ml 50mM catalyst [CpFeCO(maleic acid)]BF₄ was added 5g microcrystalline cellulose of about 200 meshes. After the vessel was sealed, it was placed into an ultrasound wave reactor of 2kW/20kHz to effect hydrolysis. During the reaction, the vessel containing the microcrystalline cellulose was shaken continuously. The microcrystalline cellulose solid completely disappeared after 4 hours. The concentration of the reducing saccharide in the reaction solution was measured by HPLC to be 50.1mg/ml. No degradation product of glucose was detected in the hydrolysate solution.

### Example 4: Catalytic Hydrolysis of Cellulose in the Presence of the Catalyst [CpFeCO(maleic acid)]BF₄

Into a suitable vessel was added 20.0g corn stalk which had been comminuted (comprising 5.8% of moisture) and dried naturally. Then, 100ml deionized water was added, and the resultant mixture was heated to approximately 100°C under agitation and held at this temperature for about 30-60 minutes. After cooled to below 50°C, the mixture was centrifuged and the dark brown yellow liquid was removed. The remaining solid was loaded into a suitable stainless autoclave, and then 100ml deionized water was added therein. After sealed, the autoclave was heated to 170°C and held at this temperature for about 120 minutes. After cooled to below 50°C, the mixture was centrifuged to remove the pale yellow liquid which was analyzed to contain substantially only hemicellulose.
A small amount of solid was taken from the remaining solid which is nearly white in color for analysis. The result showed that the solid comprises 6.5g cellulose and 3.8g lignin. The loss of cellulose was 5.2%, while there is no loss of lignin.

The resultant solid was equally divided into two aliquots which were loaded into two suitable 60ml stainless autoclaves respectively. Deionized water was added to make up the whole volume of the content in these two reactors to 50ml. After sealed, the autoclaves were heated to 180°C. High-pressure nitrogen was used to feed an amount of saturated solution of the catalyst [CpFeCO(maleic acid)]BF₄ into reactor A to make the concentration thereof reach 50mM, and the reactor was held at 180°C for about 6 hours. Concentrated sulfuric acid was added into reactor B to make the concentration thereof also reach 50mM, and the reactor was held at 180°C for about 6 hours, too. Then, both reactors A and B were cooled to below 30°C.

In reactor A, the hydrolytic degree of cellulose was 81%, and the concentration of glucose was 53mg/ml. In reactor B, the hydrolytic degree of cellulose was 86%, and the concentration of glucose was 13mg/ml. These results showed that the catalytic effect of the bionic catalyst [CpFeCO(maleic acid)]BF₄ was very close to that of strong inorganic acid, while the yield of glucose was far higher than that of sulfuric acid, specifically over four times higher.

### Example 5: Simultaneous Catalytic Hydrolysis of Cellulose and Hemicellulose in the Presence of the Catalyst [CpFeCO(maleic acid)]BF₄

Into a suitable vessel was added 20.0g corn stalk which had been comminuted (comprising 5.8% of moisture) and dried naturally. Then, 100ml deionized water was added, and the resultant mixture was heated to approximately 120°C under agitation and held at this temperature for about 30-60 minutes. After cooled to below 50 °C , the mixture was centrifuged and the dark brown yellow liquid was removed. When the liquid was vaporized, the solid obtained was almost exclusively hemicellulose which could be directly used for prepare xylitol. The remaining solid after steam boiling was vacuum dried and loaded into a corrosion resistant vessel. After 150ml 85% phosphoric acid was added, the vessel was placed into an ultrasound wave reactor of 2kW/20kHz and agitation was continued for 30 minutes. Then, 400ml acetone was added, and the mixture was blended thoroughly and centrifuged to separate the supernatant. This step was repeated once. The combined supernatant comprises lignin and hemicellulose. Into the solid left at the bottom was added 300ml pure water to wash it. After acetone was recovered by distilling the acetone extract liquid, the remaining mixture was centrifuged to separate lignin solid, and the remaining liquid was a solution containing a small amount of diluted phosphoric acid. According to the process of the invention, both phosphoric acid and acetone are recycled.

The resultant cellulose solid could be hydrolyzed directly to give monosaccharide that can be used for fermentation.

The cellulose solid and the hemicellulose solid obtained by steam boiling were both equally divided into two aliquots respectively. One aliquot cellulose solid and one aliquot hemicellulose solid were loaded into a suitable 100ml stainless autoclave. Deionized water was added to make up the whole volume of the content in the reactor to 90ml. After sealed, the autoclaves were heated to 180°C. High-pressure nitrogen was used to feed an amount of saturated solution of the catalyst [CpFeCO(maleic acid)]BF₄ into the reactor to make the concentration thereof reach 100mM. The reactor was held at 180°C for about 6 hours and then cooled to below 30°C.

In the reactor, the hydrolysis degree of cellulose was over 99%, the concentration of glucose was 38mg/ml, and the yield was 91%. In the solution, the concentration of xylose was 18mg/ml, and the yield was 83%. These results showed that the bionic catalyst disclosed in the invention could hydrolyze cellulose and hemicellulose concurrently, and the degradation level of hemicellulose was quite low.

Two grams cellulose was taken from the other aliquot and suspended in 50ml pure water. After pH was adjusted to 5.5 with diluted sulfuric acid, the solution was sterilized at 121°C for 1 hour. Into the solution was added 200µl cellulases NS50013 and 20µl cellulases NS50010 and the like. The hydrolysis was monitored and the result came out that cellulose was dissolved completely and the concentration of glucose was 43.3 mg/ml after 23 hours. The process for extracting cellulose in the invention could produce cellulose which can be readily hydrolyzed by cellulases.

### Example 6: Degradation of Glucose and Xylose by the Bionic Catalyst

Pure water, 100mM [CpFeCO(maleic acid)]BF₄ solution and 100mM sulfuric acid solution were used for preparing 10% glucose solutions and 10% xylose solutions respectively. All of the glucose solutions were rapidly heated to 190°C under the protection of nitrogen, and the concentrations thereof were measured after 30 minutes, 1 hour, 2 hours, 3 hours, 4 hours and 6 hours respectively, with the results shown in Table 1. All of the xylose solutions were rapidly heated to over 170°C under the protection of nitrogen, and the concentrations thereof were measured after 10 minutes, 20 minutes, 30 minutes, 40 minutes, 50 minutes and 60 minutes respectively, with the results shown in Table 2.

**Table 1 Variation of Glucose Concentration (mg/ml)**

| | 30min | 1h | 2h | 3h | 4h | 6h |
|---|---|---|---|---|---|---|
| Water Solution | 98.2 | 96.1 | 94.2 | 91.8 | 89.4 | 84.1 |
| Bionic Catalyst | 99.7 | 97.5 | 96.3 | 95.1 | 94.3 | 91.6 |
| Sulfuric Acid | 87.6 | 57.8 | 40.5 | 35.8 | 29.1 | 23.3 |

**Table 2 Variation of Xylose Concentration( mg/ml)**

| | 10min | 20min | 30min | 40min | 50min | 60min |
|---|---|---|---|---|---|---|
| Water Solution | 96.2 | 94.9 | 93.2 | 92.1 | 91.1 | 89.7 |
| Bionic Catalyst | 97.7 | 96.3 | 95.8 | 94.6 | 94.1 | 93.7 |
| Sulfuric Acid | 83.1 | 67.7 | 56.8 | 49.3 | 47.2 | 36.9 |

### Example 7: Hydrolysis of Cellulosic biomass by the Bionic Catalyst, Recovery of the Catalyst and Fermentation of Saccharide Solutions

Into a suitable vessel was added 40.0g corn stalk which had been comminuted (comprising 5.6% of moisture) and dried naturally. Then, 200ml deionized water was added, and the resultant mixture was heated to approximately 100°C under agitation and held at this temperature for about 30-60 minutes. After cooled to below 50 °C , the mixture was centrifuged. The dark brown yellow liquid was removed. The remaining solid was added into 30% ammonia, to which pure water was added to make the solid content of the mixture to be about 10% (total volume 400ml, ammonia concentration 18-20%). After the vessel was sealed, it was placed into an ultrasound wave reactor of 2kW/20kHz to effect pretreatment via extraction reaction. During the reaction, the vessel containing the microcrystalline cellulose was shaken continuously. After 1 hour, a sample was taken from the reactor for detection, and it was found that 95% lignin had been dissolved in ammonia. The solid and liquid products were separated by filtration. The liquid product was distilled to recover ammonia, and the remaining liquid was cooled and adjusted to pH 2.5 with sulfuric acid under continuous agitation. After filtration, brown yellow lignin solid product was obtained, washed twice with water, and vacuum dried to give very pure lignin.

The solid product separated out after pretreatment was washed to be approximately neutral with pure water, and loaded into a suitable 100ml stainless autoclave. Deionized water was added to make up the whole volume of the content in the autoclave to 90ml. The autoclave was sealed and heated to 200°C. High-pressure nitrogen was used to feed an amount of saturated solution of the catalyst [CpFeCO(maleic acid)]BF₄ into the reactor to make the concentration thereof reach 100mM. The reactor was held at 200°C for 1 hour and then cooled to below 25°C. In the reactor, the hydrolytic degree of cellulose was over 99%, the concentration of glucose was 136mg/ml, and the yield was 90%. The results showed that the bionic catalyst disclosed in the invention had very high activity for hydrolyzing cellulose, and degradation level of glucose was low at high temperature.

The glucose solution as obtained above was divided evenly into two aliquot, one of which was extracted three times with 150ml ethyl ether (50ml per time). The combined extract liquor was distilled to remove ethyl ether and recover the catalyst with a recovery rate of 69%. The residual ethyl ether was removed from the aqueous solution by blowing nitrogen therethrough. After adjusted to pH 5.5, about 1.5% bean cake powder was added to the raffinate. The raffinate was sterilized at 121°C for 30 minutes, and then 1% highly effective Angel brewers' dry yeast was added to allow fermentation to proceed for 24 hours at 34°C. A sample was taken therefrom for examination, wherein substantially no glucose was detected and the concentration of alcohol was 5.9%. This result indicated that extraction with ethyl ether had no impact on fermentation of saccharide solution.

The other glucose solution passed through a 30cm x 60cm XAD-4 macroporous adsorption resin column at a flow rate of 2ml/min. Substantially no catalyst was detected in the resultant glucose solution. After adjusted to pH=5.5, about 1.5% bean cake powder was added to the solution. The solution was sterilized at 121°C for 30 minutes, and then 1% highly effective Angel brewers' dry yeast was added to allow fermentation to proceed for 24 hours at 34°C. A sample was taken therefrom for examination, wherein substantially no glucose was detected and the concentration of alcohol was 5.9%. This result indicated that recovery of the catalyst with macroporous adsorption resin had no impact on fermentation of saccharide solution.

### Example 8: Conversion of Lignin into Gasoline Product

Dry lignin was dehydrated for 1 hour at 330-380°C under nitrogen atmosphere, and mixed thoroughly with tetrahydronaphthalene at equal weight ratio. A Ni/C catalyst was added into a Hastolly C pressure reactor (content of catalyst being 10%). At 12Mpa of hydrogen pressure, the mixture was heated to 390-400°C and held at this temperature for 1 hour. Magnetic agitation was applied during the reaction. After the reaction was completed, the resultant mixture was cooled to room temperature. Analysis on the composition of the liquid showed that the content of the components having C₆-C₁₂ and boiling point between 60 °C and 200°C was 86.8% (gasoline). The result indicated that the lignin obtained according to the invention was excellent starting material for producing gasoline.

### Industrial Application

(1) The invention has provided a brand new bionic catalyst system for hydrolyzing cellulose, which may be used in rapid hydrolysis of cellulose to form glucose at both ambient and high temperature and pressure, and may ensure that the glucose obtained by rapid hydrolysis of cellulose having relatively high concentration can be used directly in fermentation to form alcohol. In addition, the bionic catalyst system is not sensitive to the presence of lignin and hemicellulose, and in contrast to enzyme catalyst, the bionic catalyst generally comprises very small molecules which have easier access to the surface of cellulose so as to hydrolyze it. Owing to these two advantages, when the bionic catalyst is used for the hydrolysis of cellulose, the pretreatment of cellulosic biomass needn't be thoroughly carried out. Meanwhile, the bionic catalyst system may be used for catalyzing hydrolysis of hemicellulose, and the degradation product contained in the hydrolysate products has no impact on the fermentation of the hydrolysate products.
(2) The invention has further provided a production process wherein the bionic catalyst system mimicking hydrolase for hydrolyzing cellulose is used effectively, exploiting the maximum commercial value of all the main available components of cellulosic biomass as the starting material. According to our preliminary estimation, when compared with the totally new production process of the invention wherein cellulose is converted into ethanol fuel, lignin into gasoline and hemicellulose into xylitol and non-fat feedstock, the product value per ton of cellulosic biomass in prior art production process is less than 20% of that in the new production process of the invention, even if it is assumed that all fermentable saccharide in the cellulosic biomass is converted into ethanol fuel and lignin is used as the substitute of coal in prior art.
(3) The invention has further provided a practicable process for recovering the catalyst, further lowering the production cost of a biomass refinery.
(4) The invention has still further provided a process for rapid pretreatment of cellulosic biomass at ambient temperature and pressure, wherein the resultant cellulose can be readily hydrolyzed, and the solvent used is easily recoverable, further lowering the production cost of a biomass refinery.

All references mentioned in this disclosure are incorporated herein by reference, as if each of them would be incorporated herein by reference independently. In addition, it is to be appreciated that various changes or modifications can be made to the invention by those skilled in the art who have read the content taught above. These equivalents are intended to be included in the scope defined by the appended claims of the application.

## Claims

1. A bionic catalyst for catalytic hydrolysis of cellulose and/or hemicellulose, wherein the catalyst comprises a bi-acid group catalytic domain and a cellulose binding domain.

2. The catalyst of claim 1, wherein it has a structure shown in formula 1: 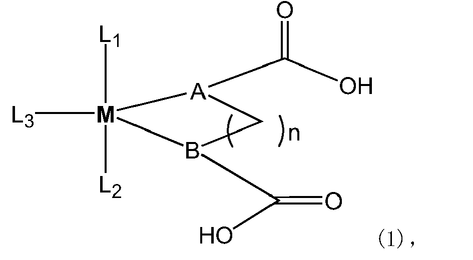 wherein:
M represents the catalytic domain of bi-acid group, of which the catalytic center is iron or zinc;
L₁, L₂ and L₃ represent the cellulose binding domain, wherein the cellulose binding domain is a monodentate, bidentate, tridentate and/or tetradentate ligand, and they may be identical or different;
A and B are independently C, N, S, B, Si or P, wherein A and B may be identical or different, and a single or double bond exists between A and B;
n represents an integer selected from 0, 1 or 2.

3. The catalyst of claim 2, wherein the monodentate ligand is selected from those comprising N, O, S, P, halogen, C, Si, B and the like as ligating atoms, or those comprising double bond, triple bond, aromatic ring and the like as a ligating site, preferably CO, Cp⁻, organic phosphorus ligands, halogen ions (Cl⁻, Br⁻, I⁻), PF₆⁻, BF₄⁻, maleic acid, itaconic acid, fumaric acid or a combination thereof;
the bidentate ligand is selected from N-N ligands, N-P ligands, P-O ligands, P-P ligands, O-N ligands, O-S ligands, S-N ligands, O-O ligands, P-S ligands, S-S ligands, and those comprising N, O, S, P, C, B, Si as ligating atoms and containing any two ligating sites,
preferably 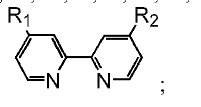 ;
the tridentate ligand is selected from N-N-N ligands, N-P-N ligands, P-N-N ligands, P-P-N ligands, P-N-P ligands, O-N-N ligands, S-N-N ligands, O-N-O ligands, P-N-S ligands, P-P-P ligands, S-S-S ligands, O-O-O ligands, and those comprising N, O, S, P, C, B, Si as ligating atoms and containing any three ligating sites, preferably terpyridine containing three nitrogen atoms, maltol containing nitrogen and oxygen, or a combination thereof.

4. A process for hydrolyzing cellulosic biomass comprising cellulose, hemicellulose and/or lignin, wherein the process comprises the following steps:
(a) providing a mixture of bionic catalyst and cellulosic biomass;
(b) hydrolyzing the mixture of step (a) to give a hydrolysate comprising monosaccharide;
and
(c) fermenting, degrading or liquefying the hydrolysate of step (b) to give liquid fuel, wherein the liquid fuel includes ethanol, gasoline, aromatic compounds or a combination thereof.

5. The process of claim 4, wherein step (b) is carried out in a thermal field.

6. The process of claim 4, wherein the cellulosic biomass has been pretreated by a high-pressure-and-temperature process using strong acid or base, strong acid or base steam explosion, ammonia steam explosion, a ambient temperature and pressure chemical-physical field process or a combination thereof;
Preferably, the physical field of the ambient temperature and pressure chemical-physical field process includes ultrasound wave, microwave, magnetic force or a combination thereof;
Preferably, the chemical reagent of the ambient temperature and pressure chemical-physical field process includes substances that can be readily recycled by distillation, with ammonia and concentrated phosphoric acid more preferred.

7. The process of claim 6, wherein if the chemical reagent of the ambient temperature and pressure chemical-physical field process is concentrated phosphoric acid, the pretreatment comprises the following steps:
treating the mixture of cellulosic biomass and concentrated phosphoric acid in the physical field to give the pretreated cellulosic biomass;
separating the pretreated cellulosic biomass to give cellulose as well as recycled phosphoric acid and organic solvent.

8. The process of claim 6, wherein cellulosic biomass is pretreated in step (b) by a ambient temperature and pressure chemical-physical field process, wherein:
the physical field is an ultrasound wave field having a frequency in the range of 17kHz-300MHz, most suitably in the range of 18kHz-100MHz, and an intensity in the range of 0.1W-10kW/L, preferably in the range of 0.1W/cm²-300 W/cm², most suitably in the range of 2-6kW, preferably in the range of 80 W/cm²-200 W/cm², most preferably 2kW/20kHz; and/or
the physical field is a microwave field having a frequency in the range of 300MHz-300GHz, and an intensity in the range of 0.1W-10kW/L, preferably in the range of 100-3000W/L; and/or
the physical field is a magnetic force field having an intensity of 0.2-12T.

9. The process of claim 4, wherein the process further comprises a catalyst recovering step (d1): extracting the hydrolysate of step (b) with an organic solvent to recover the catalyst.

10. The process of claim 4, wherein the process further comprises a catalyst recovering step (d2): treating the hydrolysate of step (b) with exchange resin to recover the catalyst;
Preferably, the resin is a macroporous adsorption resin, a weak basic type macroporous adsorption resin, a heat regenerable resin or a combination thereof.

11. A use of the bionic catalyst of claim 1 in the hydrolysis of cellulose and/or hemicellulose.
